# EUROPÄISCHE PATENTSCHRIFT

(11) **EP 1 187 995 B1**
(45) Veröffentlichungstag und Bekanntmachung des Hinweises auf die Patenterteilung: **11.08.2004**
(21) Anmeldenummer: 00936824.2
(22) Anmeldetag: 30.05.2000
(51) Int. Cl.: F16B 4/00, B21D 39/06, B62D 1/16

(54) **FÜGEVERBINDUNG UND EIN VERFAHREN ZUR HERSTELLUNG DERSELBEN, SOWIE LENKSÄULE VON KRAFTFAHRZEUGEN MIT EINER SOLCHEN FÜGEVERBINDUNG**
JOINING CONNECTION, METHOD FOR PRODUCING THE SAME, AND A STEERING COLUMN FOR MOTOR VEHICLES COMPRISING SUCH A JOINING CONNECTION
ASSEMBLAGE PAR ABOUTEMENT ET PROCEDE PERMETTANT DE LE REALISER ET COLONNE DE DIRECTION POUR AUTOMOBILES MUNIE D'UN TEL ASSEMBLAGE PAR ABOUTEMENT

(30) Priorität: 29.06.1999 DE 19929957
(43) Veröffentlichungstag der Anmeldung: 20.03.2002
(73) Patentinhaber: DaimlerChrysler AG, 70567 Stuttgart (DE)
(72) Erfinder: FREIWALD, Bernd, D-21279 Hollenstedt (DE); HARMS, Torsten, D-21129 Hamburg (DE); KAHNERT, Hartmut, D-21629 Neu Wulmstorf (DE); SÄTTLER, Olaf, D-21271 Asendorf (DE)
(86) Internationale Anmeldenummer: PCT/EP2000/004895
(87) Internationale Veröffentlichungsnummer: WO 2001/002738

(56) Entgegenhaltungen:
- EP-A- 0 272 511
- DE-A- 2 400 148
- DE-A- 2 905 130
- DE-U- 9 301 373
- GB-A- 2 187 405

## Beschreibung

Die Erfindung betrifft eine Fügeverbindung gemäß dem Oberbegriff des Patentanspruches 1 und ein Verfahren zur Herstellung derselben gemäß dem Oberbegriff des Patentanspruches 6, sowie eine Lenksäule von Kraftfahrzeugen gemäß dem Oberbegriff des Patentanspruches 11.

Eine Lenksäule der gattungsgemäßen Bauart ist aus der DE 36 00 134 Cl bekannt, an deren aus Kunststoff bestehenden Mantelrohr ein Halter für die Befestigung eines Lenkstockschalters einstückig angespritzt ist. Hierbei ist der werkzeugtechnische Aufwand sehr groß, da die Spritzform sehr komplex ausgebildet werden muß. Des weiteren ist der Kunststoff des Mantelrohres aufgrund seiner erforderlichen Steifigkeit sehr spröde und somit im Falle eines Crashs leicht brechbar, was für die Fahrzeuginsassen, insbesondere für den Fahrer gravierende gesundheitliche Folgen bedeuten kann.

In verschiedenen Anwendungsfällen müssen exakt aufeinander ausgerichtete Bauteile auf einem Hohlprofil bzw. einem Rohr befestigt werden, wobei die Bauteil-Rohr-Befestigung, also die Fügeverbindung, axialen Verschiebekräften und Torsionsmomenten Widerstand leisten muß. Eine mögliche Fügetechnik stellt die Innenhochdruck-Umformtechnik dar, die in der Herstellung von kraftschlüssigen Bauteil-Rohr-Verbindungen, wie beispielsweise bei gebauten Nockenwellen zur Anwendung gelangt. Hierbei werden zunächst die zu fügenden Komponenten, nämlich Nocken und Rohr, zueinander positioniert und anschließend das Rohr mittels Innenhochdruck - geliefert über eine in das Rohr eingeschobene Aufweitlanze - unter dem Nocken partiell beaufschlagt. Nacheinander kommt es dadurch zum Fließen des Rohrmaterials, zur Aufweitung und Anlage des Rohrmaterials an den Nocken und zur gemeinsamen Dehnung von Rohr- und Nockenmaterial. Der Druck wird dabei so eingestellt, daß der Nocken nach Druckentlastung elastisch zurückfedern kann. Aufgrund der Zurückfederung bei gleichzeitiger bleibender Durchmesserzunahme des Rohres wird eine praktisch unlösbare kraftschlüssige Fügeverbindung erreicht. Voraussetzung für die Art von Fügeverbindung ist allerdings, daß die Streckgrenze des Fügeteils, des Nockens, größer ist als die des Rohres. Sind die Streckgrenzenverhältnisse jedoch umgekehrt, wird das Fügeteil durch den expansiv wirkenden Innenhochdruck relativ schnell gesprengt.

Ein gattungsgemäße Fügeverbindung und ein Verfahren zu deren Herstellung ist auch aus der DE-A- 2 400 148 bekannt. Darin wird ein Rohr durch eine Bohrung einer Rohrscheibe hindurchgeschoben und nach Einschieben einer mit axial beabstandeten Dichtringen versehenen Sonde in das Rohr über einen zuerst axial und dann zwischen den Dichtringen radial verlaufenden Kanal der Sonde mit einer Druckflüssigkeit beaufschlagt. Dadurch weitet sich das Rohr auf und legt sich an die Bohrungswandung der Rohrscheibe an, wobei lediglich der Umgebungsbereich einer stirnseitig zwischen Rohr und Rohrscheibe erfolgten Schweißung ausgespart bleibt. Um höhere Auszugskräfte zu erzielen, werden in der Bohrungswandung hintereinander liegende Erweiterungen eingearbeitet, so dass bei der hydraulischen Aufweitung des Rohres zusätzlich ein Formschluß mit - in axialer Richtung gesehen - Hinterschneidungen zustande kommt, welcher zu einer Verklemmung des Rohres in der Bohrung der Rohrscheibe führt. Nachteilig ist hierbei, dass sich das Rohrmaterial zuerst an die Bohrungswandung anlegt und erst dann in die Erweiterungen hineingepreßt wird, da aufgrund der vorzeitigen Anlage Reibung zwischen dem Rohr und der Bohrungswandung auftritt, die einen weiteren Materialfluß in die Erweiterungen hinein behindert. Hierbei kann es je nach Tiefe der Erweiterungen an dieser Stelle zu derartigen Materialausdünnungen kommen, dass ein Bersten des Rohres auftreten kann und somit die Prozeßsicherheit der Herstellung nicht beliebig gewährleistet ist. Des weiteren ist der Materialeinsatz der Rohrscheibe eingeschränkt, da bei der Verwendung eines Material mit geringerer Streckgrenze als das des Rohres die Rohrscheibe nach Anlage des Rohres an der Bohrungswandung bei einer weitergehenden Aufweitung in die Erweiterungen unweigerlich zerbrechen würde.

Der Erfindung liegt die Aufgabe zugrunde, eine Fügeverbindung bzw. ein Verfahren zu deren Herstellung aufzufinden, mit der in einfacher Weise reproduzierbar und prozeßsicher ein Hohlprofil und ein Anbauteil mit geringerer Streckgrenze als das Hohlprofil unlösbar miteinander verbunden werden können. Des weiteren soll eine gattungsgemäße Lenksäule derart weitergebildet werden, daß sich eine Montage eines Halters als Anbauteil am Mantelrohr der Lenksäule, der eine geringere Streckgrenze als das Mantelrohr aufweist, mit geringem Bauteil- und Kostenaufwand und mit exakt reproduzierbarer Positionierung der beiden Fügepartner in der Fügeverbindung zueinander prozeßsicher erreichen läßt.

Die Aufgabe ist erfindungsgemäß durch die Merkmale des Patentanspruches 1 hinsichtlich der Fügeverbindung, durch die Merkmale des Patentanspruches 6 hinsichtlich des Verfahrens zu deren Herstellung und durch die Merkmale des Patentanspruches 11 bezüglich der Lenksäule gelöst.

Dank der Erfindung erhält das Anbauteil durch die lokale Aufweitung des Hohlprofiles in die Ausnehmung hinein und durch die in Folge der weitergehenden Aufweitung unter Vorspannung stehenden Anlage des Hohlprofiles zumindest punktuell oder an Teilbereichen der Ausnehmungswandungen des Anbauteils eine axiale Fixierung und gleichzeitig eine verdrehfeste Anbindung am am Hohlprofil. Die damit in einfacher Weise lediglich durch Aufbringen eines Innenhochdruckes im Hohlprofil erreichte unlösbare Verklemmung des Anbauteils mit dem Hohlprofil erfordert weder zusätzliche Befestigungselemente noch einen hohen apparativen Aufwand und Montageaufwand. Daß die Prozeßsicherheit des Fügeverfahrens bei dem niederfesten (geringe Streckgrenze) und dadurch nach einer Umformung praktisch nicht elastisch rückfedernden, sondern während der Umformung vielmehr sehr bruchanfälligen Werkstoff des Anbauteils bzw. des Halters gewährleistet ist, wird durch die Anordnung der Ausnehmung und deren Beabstandung von den quer zur Längserstreckung des Hohlprofiles bzw. des Mantelrohres liegenden Stirnseiten des Anbauteils bzw. des Halters sichergestellt, wodurch das Hohlprofilmaterial in die Ausnehmung hineinfließen kann, ohne daß sich sofort eine zu große in radialer Vorzugsrichtung wirkende Kontaktspannung zwischen dem Hohlprofil und dem Anbauteil ergibt, die das Anbauteil zerstören würde. Der bei der Anlage in der Ausnehmung sich ergebende Anpreßdruck des Hohlprofiles am Anbauteil ist groß genug, um in gewissen Grenzen Torsionsmomente übertragen zu können und damit eine ausreichende Torsionsteifigkeit der Fügeverbindung zu erreichen, jedoch wiederum nicht so groß, als daß das Anbauteil - wie vorher erwähnt - durch Sprengung zerstört werden würde. Weiterhin sind die beiden Fügepartner, Hohlprofil und Anbauteil, in der Fügeverbindung hinsichtlich ihrer relativen axialen und radialen Positionierung zueinander durch das Fügen mit Innenhochdruck sehr exakt und reproduzierbar aufeinander abgestimmt, so daß die Fügeverbindung nahezu toleranzfrei ist. Dies ist vor allem für die Toleranzbetrachtung der gesamten Bauanordnung, in der die Fügeverbindung sich befindet, beispielsweise der Lenksäule von erheblicher Bedeutung. Um die Verkürzung des Hohlprofiles beim Aufweiten zu kompensieren, muß die Länge des Ausgangsteiles entsprechend größer dimensioniert werden. Im übrigen ist bei der Lenksäule der Halter für den Lenkstockschalter nur stellvertretend für alle möglichen denkbaren Halter an der Lenksäule, beispielsweise ein Halter zur Befestigung der Lenksäule am Armaturenbrett oder an einem Querträger.

Zweckmäßige Ausgestaltungen der Erfindung können den Unteransprüchen entnommen werden; im übrigen ist die Erfindung anhand eines in den Zeichnungen dargestellten Ausführungsbeispieles nachfolgend näher erläutert; dabei zeigt:
Fig. 1a in einer perspektivischen Ansicht einen Abschnitt eines rohrförmigen Hohlprofiles,
Fig. 1b in einer perspektivischen Ansicht ein Anbauteil der erfindungsgemäßen Fügeverbindung,
Fig. 2 in einer perspektivischen Ansicht einen Halter der erfindungsgemäßen Lenksäule,
Fig. 3 in einem seitlichen Schnitt das Anbauteil aus Fig. 1b in einer erfindungsgemäßen Steckverbindung mit dem Hohlprofil aus Fig. 1a vor dem Innenhochdruckumformvorgang,
Fig. 4 in einem seitlichen Schnitt die Steckverbindung aus Fig.3 nach dem Innenhochdruckumformvorgang.

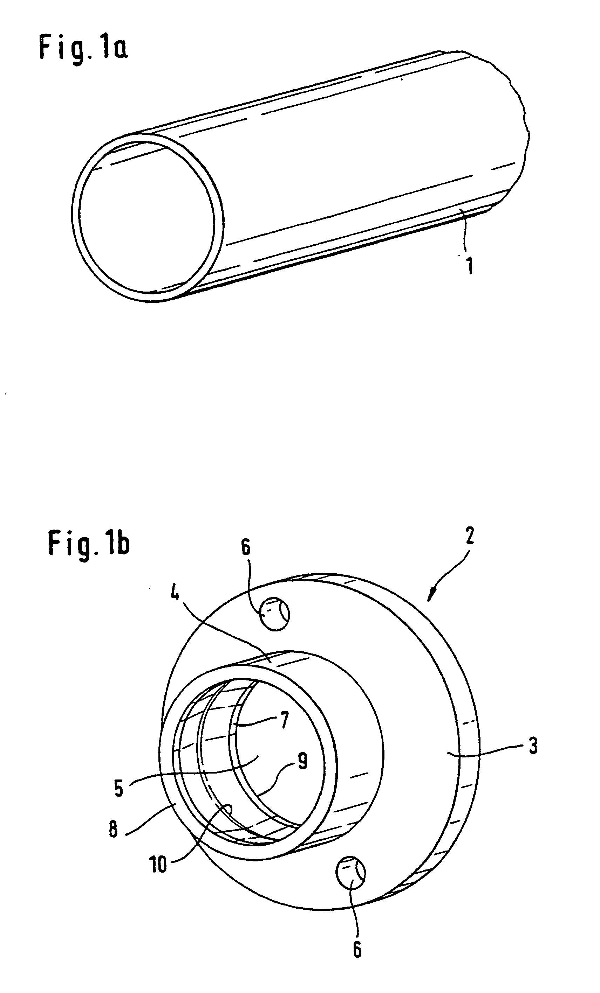

In Fig. 1a ist ein umfänglich geschlossenes Hohlprofil 1 dargestellt, welches aus einem duktilen Stahlwerkstoff, vorzugsweise aus St 37 oder St 52 besteht. Ein die erfindungsgemäße Fügeverbindung mit dem Hohlprofil 1 eingehendes Anbauteil 2 zeigt die Fig. 1b. Das Anbauteil 2 ist ringförmig ausgebildet und besteht aus einem niederfesten Gußwerkstoff, aus Druckguß oder aus Spritzguß, vorzugsweise aus ZnAl4Cu1, oder einem niederfesten Stahl oder einem Leichtmetallwerkstoff. Der Werkstoff ist so ausgewählt, daß er in jedem Falle eine geringere Streckgrenze als der des Hohlprofiles 1 besitzt. Das Anbauteil 2 weist in diesem Ausführungsbeispiel an einem Ende einen Ringflansch 3 auf, von dem mittig ein Einführstutzen 4 mit einer Durchgangsöffnung 5 senkrecht abragt. Der Ringflansch 3 besitzt zwei einander diametral gegenüberliegende Befestigungslöcher 6, über die das Anbauteil 2 bzw. nach dem Fügevorgang auch das Hohlprofil 1 an der Peripherie des Fügeverbundes aus Hohlprofil 1 und Anbauteil 2 - im Falle der Verwendung des Fügeverbundes im Rohbau von Kraftfahrzeugen karosseriefest - angebracht werden oder über die weitere Bauelemente an dem Fügeverbund befestigt werden. An der Innenseite 7 der Durchgangsöffnung 5 ist eine von den in Schiebesitzlage quer zur Längsrichtung des einzuschiebenden Hohlprofiles 1 liegenden Stirnseiten 8,9 des Anbauteils 2 beabstandete Ausnehmung 10 ausgebildet, die eine ringförmige Freidrehung sein kann.

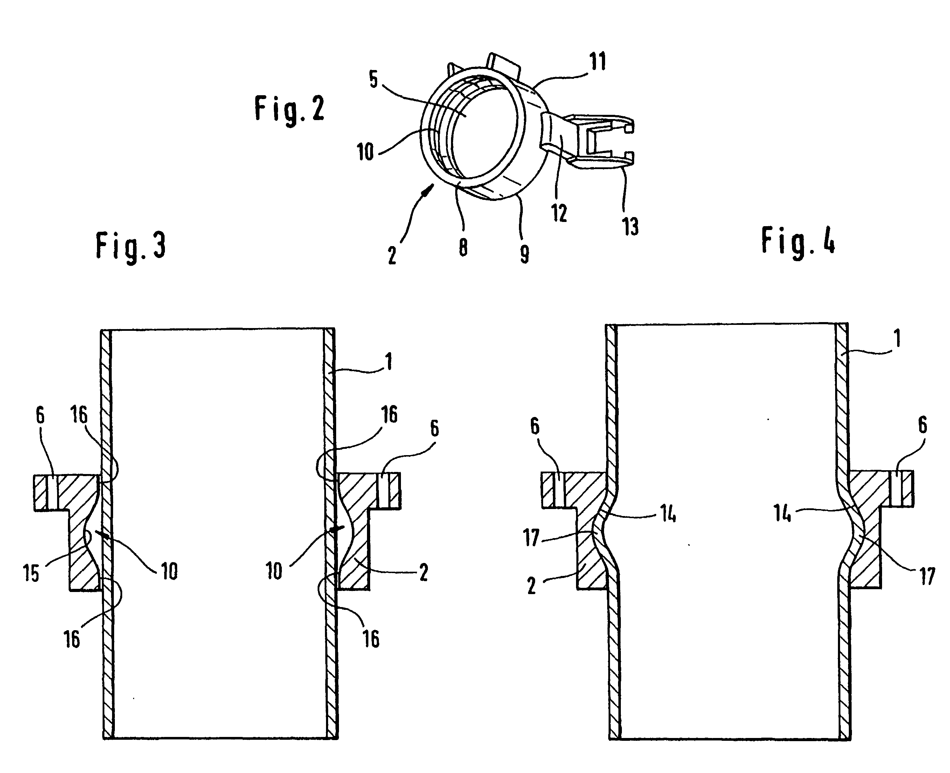

Das Hohlprofil 1 kann beispielsweise ein Mantelrohr einer Lenksäule von Kraftfahrzeugen sein, das die Lenkspindel der Lenksäule umgibt. Die Lenksäule weist mehrere Halter auf, welche die Anbauteile 2 bilden. Einer dieser Halter ist der Fig. 2 entnehmbar, welcher abweichend von dem oben erwähnten Anbauteil 2 keinen Ringflansch 3 besitzt, sondern aus einem mit dem Einführstutzen 4 etwa gleichzusetzenden Ring 11 besteht, an dessen Außenumfang ein Materiallappen 12 nach unten abkragt. Dieser Materiallappen 12 ist an seinem freien Ende 13 zangenförmig ausgebildet und dient als Befestigungselement für einen Lenkstockschalter.

Die Herstellung der Fügeverbindung ist im wesentlichen aus der Fig. 3 und 4 entnehmbar. Zuerst ist die Wahl der Werkstoffe der Fügepartner Hohlprofil 1 - Anbauteil 2 wichtig. Hierbei soll das Hohlprofil 1 aus einem duktilen Material bestehen, das beim späteren Innenhochdruckumformvorgang prozeßsicher aufweitbar ist. Hierfür sind die meisten Stahlarten denkbar. Das Hohlprofil 1 kann gezogen sein oder aus einer Platine gerollt und dann längsnahtgeschweißt sein. Unter dem Aspekt des Leichtbaus kommt bei der Ausbildung des Anbauteils 2 in der Regel ein Material zum Einsatz, das eine geringere Streckgrenze aufweist als das des Hohlprofiles 1. Das Anbauteil 2 ist je nach Zweck und Bedarf meist kompliziert ausgebildet, so daß es unter Kostengesichtspunkten und vor dem Hintergrund eines geringen Werkzeugund Arbeitsaufwandes günstig ist, das Anbauteil 2 als Leichtmetallgußteil mit verlorenem Kern zu gießen oder spritzzugießen.

Ebenso kann es durch Schmieden eines Leichtbaustahls geformt sein.

Die Ausnehmung 10 des Anbauteils 2 wird im Fall der Herstellung als Gußteil mitgegossen oder in einem anschließenden spanabhebenden Bearbeitungsvorgang eingearbeitet, vorzugsweise freigedreht. Wird das Anbauteil 2 geschmiedet, kann anschließend die Ausnehmung 10 eingeprägt, gedreht oder ausgefräst werden. Das Anbauteil 2 wird mit seiner Durchgangsöffnung 5 auf das Hohlprofil 1 an die vorgesehene Fügestelle aufgeschoben (Fig.3).

In der erreichten Schiebesitzlage wird anschließend eine Aufweitlanze in das Hohlprofil 1 eingeschoben, welche eine Axialbohrung besitzt, an deren einem Ende ein Fluidhochdruckerzeugungsanlage angeschlossen ist und vor der am anderen Ende zumindest ein Radialkanal mit Ausmündung am Außenumfang der Aufweitlanze abzweigt. Die Ausmündung wird von zwei axial beabstandeten an der Aufweitlanze angeordneten Ringdichtungen eingefaßt. Die Aufweitlanze wird so weit in das Hohlprofil 1 eingeschoben, daß die Ausmündung an der Stelle der Ausnehmung 10 des das Hohlprofil 1 umgebenden Anbauteils 2 zu liegen kommt. Hierauf wird ein Druckfluid über die Axialbohrung und die Radialbohrungen der Aufweitlanze auf die Innenseite des Hohlprofils 1 geleitet, welches sich dort aufgrund des sehr hohen Fluiddruckes (>700 bar) und dank seiner Duktilität lokal aufweitet.

Hierbei fließt das Hohlprofilmaterial in die Ausnehmung 10 hinein und kommt an deren Wandungen 14 zu liegen. Dies kann punktuell geschehen oder, wie es aus Fig. 4 ersichtlich ist, unter vollständiger formschlüssiger Anlage erfolgen. In beiden Fällen ist das Anbauteil 2 am Hohlprofil 1 axial unlösbar fixiert und an diesem aufgrund des Reibschlusses an den Anlagestellen auch drehfest gehalten. Dies ist bei einem vollständigen Formschluß, also der formgetreuen Anlage des Hohlprofils 1 an den Ausnehmungswandungen 14 des Anbauteils 2 optimal. Um diesen in einfacher Weise und ohne einen nachträglichen eventuell materialbeeinträchtigenden und damit nicht-prozeßsicheren Kalibrierungschritt zu erhalten, wird die Ausnehmung 10 entsprechend der Aufweitungsformcharakteristik einer freien Aufweitung des Hohlprofiles 1 von ihrem Grund 15 bis zu ihren Rändern 16 hin flach ansteigend gewölbt ausgebildet. Die freie Aufweitung zeichnet sich dadurch aus, daß das Hohlprofil 1 erst zum Abschluß der Aufweitung einen Anlagekontakt mit dem Fügepartner Anbauteil 2 ausbildet.

Insgesamt wird durch die Aufweitung der Hohlprofilwandung am Hohlprofil 1 mittels Innenhochdruck ein Arretierungselement ausgeformt, welches ganzflächig an den Ausnehmungswandungen 14 anliegt und das Hohlprofil 1 mit dem Anbauteil 2 unverrückbar verklemmt. Das Arretierungselement ist in diesem Ausführungsbeispiel entsprechend der Gestaltung der Ausnehmung 10 in Form einer Ringnut durch einen Ringwulst 17 gebildet. Es ist im übrigen denkbar, anstatt der Ringnut an der Innenseite 7 eine oder mehrere über deren Umfang verteilte Mulden auszubilden. Dies hat zum Vorteil, daß der nach der Innenhochdruckumformung erreichte Formschluß sich auch in einer radial gerichteten Fixierung des Anbauteils 2 am Hohlprofil 1 auswirkt, so daß der Reibschluß bei der Arretierung hier nur eine untergeordnete Rolle spielt und dadurch noch höhere Torsionsmomente als im vorangegangenen Ausführungsbeispiel aufgenommen werden können. Eine weitere Verbesserung der Haltbarkeit der Fügeverbindung gegenüber mechanischen Belastungen kann durch Aufrauhen der Innenseite 7 des Anbauteils 2 bzw. Halters erzielt werden, in der sich das während der Innenhochdruckbeaufschlagung fließende Wandungsmaterial des Hohlprofiles 1 über das Arretierungelement dann mikrofein verkrallen kann.

## Patentansprüche

1. Fügeverbindung zwischen einem umfänglich geschlossenen Hohlprofil (1) und einem mit einer Durchgangsöffnung (5) versehenen Anbauteil (2), welches an der Innenseite (7) der Durchgangsöffnung (5) eine von den Stirnseiten (8,9) des Anbauteils (2) beabstandete Ausnehmung (10) aufweist, wobei das Anbauteil (2) mit seiner Durchgangsöffnung (5) auf das Hohlprofil (1) aufgeschoben ist und in dieser Schiebesitzlage mit diesem durch eine mittels Innenhochdruckumformens gebildete Aufweitung des Hohlprofiles (1) verklemmt ist,
**dadurch gekennzeichnet,**
**dass** das Anbauteil (2) aus einem Werkstoff geringerer Streckgrenze als dem des Hohlprofiles (1) besteht und dass das Anbauteil (2) mit dem Hohlprofil (1) allein lokal an der Stelle der Ausnehmung (10) verklemmt ist.

2. Fügeverbindung nach Anspruch 1,
**dadurch gekennzeichnet,**
**daß** die Ausnehmung (10) eine ringförmige Freidrehung ist.

3. Fügeverbindung nach Anspruch 1,
**dadurch gekennzeichnet,**
**daß** das Hohlprofil (1) aus einem duktilen Stahlwerkstoff, vorzugsweise aus St 37 oder St 52, und das Anbauteil (2) aus einem Gußwerkstoff, aus Druckguß oder aus Spritzguß, vorzugsweise aus ZnAl4Cu1, oder einem niederfesteren Stahl oder einem Leichtmetallwerkstoff besteht.

4. Fügeverbindung nach Anspruch 1,
**dadurch gekennzeichnet,**
**daß** die Ausnehmung (10) von ihrem Grund (15) bis zu ihren Rändern (16) hin flach ansteigend gewölbt ausgebildet ist.

5. Fügeverbindung nach Anspruch 1,
**dadurch gekennzeichnet,**
**daß** die aufgeweitete Stelle des Hohlprofiles (1) formgetreu an den Wandungen (14) der Ausnehmung (10) anliegt.

6. Verfahren zum Herstellen einer Fügeverbindung zwischen einem umfänglich geschlossenen Hohlprofil (1) und einem mit einer Durchgangsöffnung (5) versehenen Anbauteil (2), wobei an der Innenseite (7) der Durchgangsöffnung (5) eine von den Stirnseiten (8,9) des Anbauteils (2) beabstandete Ausnehmung (10) ausgebildet wird, wonach das Anbauteil (2) mit seiner Durchgangsöffnung (5) auf das Hohlprofil (1) aufgeschoben wird, und wobei anschließend das Hohlprofil (1) in der erreichten Schiebesitzlage durch einen fluidischen Innenhochdruck vermittels einer in das Hohlprofil (1) eingeschobenen Aufweitlanze aufgeweitet wird, derart, daß das Hohlprofil (1) am Anbauteil (2) unverrückbar verklemmt wird,
**dadurch gekennzeichnet,**
**dass** ein Anbauteil aus einem Werkstoff geringerer Streckgrenze als dem des Hohlprofiles (1) verwandt wird, und dass das Hohlprofil (1) allein in die Ausnehmung (10) hinein lokal aufgeweitet wird.

7. Verfahren nach Anspruch 6,
**dadurch gekennzeichnet,**
**daß** die Ausnehmung (10) von ihrem Grund (15) bis zu ihren Rändern (16) hin flach ansteigend gewölbt ausgebildet wird und daß das Hohlprofil (1) bis zur vollständigen Anlage an den Ausnehmungswandungen (14) aufgeweitet wird.

8. Verfahren nach Anspruch 6,
**dadurch gekennzeichnet,**
**daß** das Anbauteil (2) als Gußteil mit verlorenem Kern gegossen wird, wobei die Ausnehmung (10) mitgegossen wird.

9. Verfahren nach Anspruch 6,
**dadurch gekennzeichnet,**
**daß** das Anbauteil (2) spritzgegossen oder druckgegossen wird und die Ausnehmung (10) anschließend freigedreht wird.

10. Verfahren nach Anspruch 6,
**dadurch gekennzeichnet,**
**daß** das Anbauteil (2) aus einem niederfesten Stahl geformt, insbesondere geschmiedet wird, und daß danach die Ausnehmung (10) eingeprägt, gedreht oder ausgefräst wird.

11. Lenksäule von Kraftfahrzeugen mit einem eine Lenkspindel umgebenden ein Hohlprofil bildendes Mantelrohr und einem ein Anbauteil darstellenden Halter beispielsweise für einen Lenkstockschalter, wobei der Halter an das Mantelrohr gefügt ist,
**dadurch gekennzeichnet,**
**daß** der aus einem Werkstoff geringerer Streckgrenze als dem des Mantelrohres (1) bestehende Halter (2) eine umfänglich geschlossene Durchgangsöffnung (5) aufweist und mit dieser auf das Mantelrohr (1) geschoben ist, wobei die Durchgangsöffnung (5) an der Innenseite (7) zumindest eine von den quer zur Längsrichtung des Mantelrohres (1) liegenden Stirnseiten (8,9) des Halters (2) beabstandete Ausnehmung (10) besitzt, und daß das Mantelrohr (1) ein in der Schiebesitzlage des Halters (2) an der Stelle der Ausnehmung (10) lokal durch einen fluidischen Innenhochdruck radial aus seiner Wandung ausgeformtes Arretierungselement aufweist, das in der Ausnehmung (10) infolge der Ausformung unter Bildung einer unlösbaren Fügeverbindung zwischen Halter (2) und Mantelrohr (1) verklemmt ist.

12. Lenksäule nach Anspruch 11,
**dadurch gekennzeichnet,**
**daß** das Arretierungselement ganzflächig an den Ausnehmungswandungen (14) anliegt.

13. Lenksäule nach Anspruch 11,
**dadurch gekennzeichnet,**
**daß** die Ausnehmung (10) durch eine Ringnut und das Arretierungselement durch einen Ringwulst (17) gebildet ist.

14. Lenksäule nach Anspruch 11,
**dadurch gekennzeichnet,**
**daß** das Mantelrohr (1) aus einem duktilen Stahlwerkstoff, vorzugsweise aus St 37 oder St 52, und der Halter (2) aus einem Gußwerkstoff oder aus Spritzguß oder Druckguß, vorzugsweise aus ZnAl4Cul, oder einem niederfesten Stahl oder einem Leichtmetallwerkstoff besteht.

15. Lenksäule nach Anspruch 11,
**dadurch gekennzeichnet,**
**daß** die Ausnehmung (10) von ihrem Grund (15) bis zu ihren Rändern (16) hin flach ansteigend gewölbt ausgebildet ist.

## Claims

1. A bonded connection between a peripherally closed hollow section (1) and an add-on component (2) provided with a through hole (5) which has a recess (10) on the inside (7) of said through opening (5) which is positioned at a distance from the end faces (8, 9) of the add-on component (2), the through hole (5) of the add-on component (2) being pushed over the hollow section (1) and clamped to said hollow section (1) in this pushed-on position due to a flaring of the hollow section (1) achieved by means of internal high pressure forming,
**characterised in that**
the add-on component (2) is made of a material with a lower apparent yielding point than that of the hollow section (1) and the add-on component (2) is clamped to the hollow section (1) only locally at the place of the recess (10).

2. A bonded connection in accordance with claim 1,
**characterised in that**
the recess (10) is an annular, free turned groove.

3. A bonded connection in accordance with claim 1,
**characterised in that**
the hollow section (1) is made of a ductile steel material, preferably St 37 or St 52, and the add-on component (2) is made of a casting material or a diecast or injection moulded material, preferably ZnAl4Cu1, or of a low-strength steel or light meal material.

4. A bonded connection in accordance with claim 1,
**characterised in that**
the recess (10) is designed to rise smoothly in a curve from its base (15) to its edges (16).

5. A bonded connection in accordance with claim 1,
**characterised in that**
the flared part of the hollow section (10) lies exactly against the walls (14) of the recess (10).

6. A process for the production of a bonded connection between a peripherally closed hollow section (1) and an add-on component (2) which is provided with a through hole (5), a recess (10) being formed on the inside (7) of said through opening (5) at a distance from the end faces (8, 9) of the add-on component (2), the through hole (5) of the add-on component (2) being pushed over the hollow section (1) and the hollow section (1) then being flared in this pushed-on position by fluidic internal high pressure by means of a flaring lance inserted into the hollow section (1) in such a manner that the hollow section (1) is clamped immovably to the add-on component (2),
**characterised in that**
an add-on component (2) made of a material with a lower apparent yielding point than that of the hollow section (1) is used and the hollow section (1) is flared only locally into the recess (10).

7. A process in accordance with claim 6,
**characterised in that**
the recess (10) is designed to rise smoothly in a curve from its base (15) to its edges (16) and the hollow section (1) is flared until it comes into full contact with the recess walls (14).

8. A process in accordance with claim 6,
**characterised in that**
the add-on component (2) is cast as a cast part with a lost core, the recess (10) being cast at the same time.

9. A process in accordance with claim 6,
**characterised in that**
the add-on component (2) is injection moulded or diecast and the recess (10) is subsequently free turned.

10. A process in accordance with claim 6,
**characterised in that**
the add-on component (2) is made of a low-strength steel, in particular forged, and the recess (10) is subsequently engraved, turned or milled.

11. A steering column for motor vehicles having a steering column jacket which surrounds a steering shaft and forms a hollow section and a holder representing an add-on component, for example for a steering column switch, the holder being joined to the steering column jacket,
**characterised in that**
the holder (2) which consists of a material with a lower apparent yielding point than that of the steering column jacket (1) has a peripherally closed through opening (5) which is pushed over the steering column jacket (1), said through opening (5) having at least one recess (10) positioned at a distance from the end faces (8, 9) of the add-on component (2) which lie at right angles to the longitudinal axis of the steering column jacket (1) on the inside (7) and the steering column jacket (1) has a locking element which is formed radially out of its wall locally at the place of the recess (10) by fluidic internal high pressure when the holder (2) is in the pushed-on position and which is clamped in the recess (10) as a result of said forming, thereby creating a non-detachable bonded connection between the holder (2) and the steering column jacket (1).

12. A steering column in accordance with claim 11,
**characterised in that**
the entire surface of the locking element lies against the walls (14) of the recess.

13. A steering column in accordance with claim 11,
**characterised in that**
the recess (10) is formed by an annular groove and the locking element is formed by an annular bead (17).

14. A steering column in accordance with claim 11,
**characterised in that**
the steering column jacket (10) is made of a ductile steel material, preferably St 37 or St 52, and the holder (2) is made of a casting material or a diecast or injection moulded material, preferably ZnAl4Cu1, or of a low-strength steel or a light metal material.

15. A steering column in accordance with claim 11,
**characterised in that**
the recess (10) is designed to rise smoothly in a curve from its base (15) to its edges (16).

## Revendications

1. Assemblage par aboutement entre un profilé creux (1) fermé au niveau du pourtour et une partie rapportée (2) pourvue d'une ouverture de passage (5), qui présente sur le côté intérieur (7) de l'ouverture de passage (5) un évidement (10) espacé des côtés avant (8, 9) de la partie rapportée, la partie rapportée (2) étant enfilée avec son ouverture de passage (5) sur le profilé creux (1) et étant coincée dans cette position de siège coulissant avec ce profilé par un élargissement, formé au moyen d'un formage sous haute pression intérieure, du profilé creux (1), **caractérisé en ce que** la partie rapportée (2) est à base d'un matériau présentant une limite d'élasticité inférieure à celui du profilé creux (1) et **en ce que** la partie rapportée (2) est coincée avec le profilé creux (1) uniquement localement à l'emplacement de l'évidement (10).

2. Assemblage par aboutement selon la revendication 1, **caractérisé en ce que** l'évidement (10) est une partie tournée librement de forme annulaire.

3. Assemblage par aboutement selon la revendication 1, **caractérisé en ce que** le profilé creux (1) est à base d'un matériau d'acier ductile, de préférence à base de St 37 ou de St 52, et la partie rapportée (2) est à base d'un matériau de moulage, de moulage par pression ou de moulage par injection, de préférence à base de ZnAl4Cul, ou d'un acier à résistance plus faible ou d'un matériau en métal léger.

4. Assemblage par aboutement selon la revendication 1, **caractérisé en ce que** l'évidement (10) est réalisé depuis sa base (15) jusqu'en direction de ses bords (16) avec une courbure montant de façon plate.

5. Assemblage par aboutement selon la revendication 1, **caractérisé en ce que** l'endroit élargi du profilé creux (1) s'appuie de façon fidèle à sa forme sur les parois (14) de l'évidement (10).

6. Procédé pour fabriquer un assemblage à aboutement entre un profilé creux (1) fermé sur le pourtour et une partie rapportée (2) pourvue d'une ouverture de passage (5), un évidement (10) espacé des côtés avant (8, 9) de la partie rapportée (2) étant réalisé sur le côté intérieur (7) de l'ouverture de passage (5), la partie rapportée (2) étant enfilée avec son ouverture de passage (5) sur le profilé creux (1), et le profilé creux (1) étant élargi ensuite dans la position atteinte de siège coulissant par une pression élevée intérieure fluide au moyen d'une lance d'élargissement introduite dans le profilé creux (1), de telle sorte que le profilé creux (1) est coincé de façon immobile sur la partie rapportée (2), **caractérisé en ce qu'**une partie rapportée à base d'un matériau présentant une limite d'élasticité plus faible que celui du profilé creux (1), et **en ce que** le profilé creux (1) est élargi localement uniquement à l'intérieur de l'évidement (10).

7. Procédé selon la revendication 6, **caractérisé en ce que** l'évidement (10) est réalisé depuis sa base (15) jusqu'en direction de ses bords (16) avec une courbure montant de façon plate et **en ce que** le profilé (5) est élargi jusqu'à l'appui complet sur les parois de l'évidement (14).

8. Procédé selon la revendication 6, **caractérisé en ce que** la partie rapportée (2) est coulée comme pièce de moulage avec noyau perdu, l'évidement (10) étant coulé en même temps.

9. Procédé selon la revendication 6, **caractérisé en ce que** la partie rapportée (2) est moulée par injection ou par pression et l'évidement (10) est ensuite tourné librement.

10. Procédé selon la revendication 6, **caractérisé en ce que** la partie rapportée (2) est moulée, en particulier forgée à partir d'un acier à résistance peu élevée et **en ce que** l'évidement (10) est ensuite estampé, tourné ou fraisé.

11. Colonne de direction de véhicules automobiles comprenant un tube d'enveloppe entourant une broche de direction et formant un profilé creux et un support représentant une partie rapportée par exemple pour un interrupteur fixé à la colonne de direction, le support étant abouté sur le tuyau d'enveloppe, **caractérisée en ce que** le support (2) à base d'un matériau avec une limite d'élasticité plus faible que le matériau du tuyau d'enveloppe (1) présente une ouverture de passage (5) fermée sur le pourtour et est glissé avec celui-ci sur le tuyau d'enveloppe (1), l'ouverture de passage (5) présentant sur le côté intérieur (7) au moins un évidement (10) espacé des côtés avant (8, 9), situés transversalement par rapport à la direction longitudinale du tuyau d'enveloppe (1), du support (2) et **en ce que** le tuyau d'enveloppe (1) présente un élément d'arrêt formé dans la position de siège coulissant du support (2) à l'emplacement de l'évidement (10) localement par une pression élevée intérieure fluide dans le sens radial à partir de sa paroi, lequel élément est coincé dans l'évidement (10) en raison de la partie formée par la formation d'un assemblage à aboutement inamovible entre le support (2) et le tuyau d'enveloppe (1).

12. Colonne de direction selon la revendication 11, **caractérisée en ce que** l'élément d'arrêt s'appuie sur toutes la surface sur les parois d'évidement (14).

13. Colonne de direction selon la revendication 11, **caractérisée en ce que** l'évidement (10) est formé par une rainure annulaire et l'élément de verrouillage par un renflement annulaire (17).

14. Colonne de direction selon la revendication 11, **caractérisée en ce que** le tuyau d'enveloppe (1) est à base d'un matériau d'acier ductile, de préférence à base de St 37 ou de St 52, et le support (2) à base d'un matériau de moulage ou de moulage par injection ou de moulage par pression, de préférence à base de ZnAl₄Cul ou à base d'un acier à résistance peu élevée ou d'un matériau en métal léger.

15. Colonne de direction selon la revendication 11, **caractérisée en ce que** l'évidement (10) est formé depuis sa base (15) jusqu'en direction de ses bords (16) avec une courbure montant de façon plate.
